# EUROPÄISCHE PATENTSCHRIFT

(11) **EP 2 767 493 B1**
(45) Veröffentlichungstag und Bekanntmachung des Hinweises auf die Patenterteilung: **29.03.2023**
(21) Anmeldenummer: 13155552.6
(22) Anmeldetag: 16.02.2013
(51) Int. Cl.: B65G 47/50, B65G 47/34, B65G 47/04

(54) **Vorrichtung und Verfahren zum Manipulieren von Gegenständen**
Method and device for manipulating objects
Dispositif et procédé de manipulation d'objets

(43) Veröffentlichungstag der Anmeldung: 20.08.2014
(73) Patentinhaber: KNAPP Systemintegration GmbH, 8700 Leoben (AT)
(72) Erfinder: Höfler, Wolfgang, 8605 Kapfenberg (AT)
(74) Vertreter: Wirnsberger, Gernot

(56) Entgegenhaltungen:
- EP-A2- 0 125 054
- WO-A1-2012/045987
- DE-A1- 10 116 854
- DE-A1- 19 534 954
- DE-A1-102005 012 536
- GB-A- 946 616
- GB-A- 970 534
- GB-A- 1 421 348
- US-A- 2 894 516
- US-A- 2 990 965
- US-A- 3 361 247
- US-A- 3 686 899
- US-A- 3 783 560
- US-A- 4 991 719
- US-A1- 2006 070 847
- US-A1- 2011 048 894

## Beschreibung

Die Erfindung betrifft eine Vorrichtung zum Manipulieren von Gegenständen, insbesondere einer Vielzahl von verschiedenen Behältern wie Lebensmittelkisten, umfassend zumindest ein Fördermittel zum Transportieren der Gegenstände entlang eines Transportweges von einem Empfangsbereich zu einem Abgabebereich sowie zumindest einen peripheren Bereich, wie eine Waschanlage, welcher dazu ausgebildet ist, dass in diesem die Gegenstände manipuliert werden, wobei der periphere Bereich zwischen Empfangsbereich und Abgabebereich angeordnet ist und durch welchen die Gegenstände führbar sind, wobei entlang des Transportweges vor und nach dem zumindest einen peripheren Bereich Pufferbereiche zur temporären Aufnahme jeweils gleicher Gegenstände vorgesehen sind, wobei die Pufferbereiche jeweils mit mehreren Pufferstrecken ausgebildet sind, wobei entlang des Transportweges nach einem ersten Pufferbereich zumindest eine verfahrbare Entnahmeeinheit vorgesehen ist, mit der Gegenstände aus dem ersten Pufferbereich entnehmbar sind, und entlang des Transportweges vor einem zweiten Pufferbereich zumindest eine verfahrbare Beladeeinheit vorgesehen ist, mit der Gegenstände auf den zweiten Pufferbereich aufgebbar sind.

Darüber hinaus betrifft die Erfindung ein Verfahren zum Manipulieren von Gegenständen, insbesondere einer Vielzahl von verschiedenen Behältern wie Lebensmittelkisten, wobei die Gegenstände mit zumindest einem Fördermittel entlang eines Transportweges von einem Empfangsbereich zu einem Abgabebereich transportiert werden und dabei durch einen peripheren Bereich wie einen Waschanlagenbereich geführt werden, in welchem die Gegenstände manipuliert werden, wobei der periphere Bereich zwischen Empfangsbereich und Abgabebereich angeordnet ist, wobei die Gegenstände entlang des Transportweges vor und nach dem zumindest einen peripheren Bereich in Pufferbereichen temporär aufgenommen werden, wobei die Pufferbereiche jeweils mit mehreren Pufferstrecken ausgebildet sind, wobei entlang des Transportweges nach einem ersten Pufferbereich zumindest eine verfahrbare Entnahmeeinheit eingesetzt wird, mit der Gegenstände aus dem ersten Pufferbereich entnehmbar sind, und entlang des Transportweges vor einem zweiten Pufferbereich zumindest eine verfahrbare Beladeeinheit eingesetzt wird, mit der Gegenstände auf den zweiten Pufferbereich aufgegeben werden.

Lebensmittel wie frisches Obst und Gemüse werden für den Verkauf in geeigneten Kisten transportiert und in den Handel gebracht. Die Lebensmittelkisten werden nach dem Transport samt dem Obst und Gemüse unmittelbar zur Warenpräsentation eingesetzt. Üblicherweise sind die Lebensmittelkisten als oben offene, rechteckige Behälter aus einem Kunststoff gebildet.

In den Supermärkten werden die Lebensmittelkisten geleert, entweder durch vollständigen Verkauf der Ware oder durch Entleerung durch das Personal, wenn nicht das gesamte Obst und/oder Gemüse in ausreichend frischem Zustand verkauft werden konnte. Unabhängig davon bleiben zumeist erhebliche Verunreinigungen in fester oder flüssiger Form zurück. Beispielsweise sind Lebensmittelkisten, die für offene Salathäupl eingesetzt werden, nach der Benutzung in der Regel mit Teilen von Salatblättern und Flüssigkeitsresten verunreinigt. Die Lebensmittelkisten sollten daher vor einem neuerlichen Einsatz gereinigt werden.

Nach Gebrauch werden die Lebensmittelkisten in den Supermärkten ineinander gesteckt oder gestapelt und auf Paletten aufgetürmt, auf welchen die Lebensmittelkisten für eine Reinigung verfrachtet werden.

Es ist üblich, dass verschiedene Supermarktketten verschiedene Lebensmittelkisten einsetzen, die zudem auch unterschiedliche Farbe aufweisen können. Dies ermöglicht es unter anderem auch, die Lebensmittelkisten besser zuzuordnen.

Für die Reinigung der Lebensmittelkisten werden diese wie erwähnt verfrachtet und einer Vorrichtung zum Reinigen bzw. Waschen zugeführt. In einer entsprechenden Vorrichtung gemäß dem Stand der Technik werden feste und flüssige Verunreinigungen entfernt, sodass die Lebensmittelkisten wieder für frisches Obst und Gemüse einsetzbar sind.

Bei den bekannten Vorrichtungen des Standes der Technik ist allerdings nachteilig, dass diese nur eine geringe Flexibilität ermöglichen. Im Grundsatz wird so vorgegangen, dass eine Waschanlage der Vorrichtung mit jenen Lebensmittelkisten beschickt wird, die gerade gebraucht werden, z. B. rechteckige grüne Behälter einer bestimmten Supermarktkette. Anders ausgedrückt werden genau jene Lebensmittelkisten gewaschen, die aktuell benötigt werden. Die Vorrichtungen werden somit nachfrageabhängig beschickt.

Das Dokument DE 10 2005 012 536 A1 offenbart eine Vorrichtung zur Ausgabe von Backwaren, wobei Backwaren auf Trägern entlang eines Transportkreislaufes zu einem Abführspeicher transportiert Die Merkmale des Oberbegriffs des Anspruchs 1 und des Oberbegriffs des Anspruchs 6 sind aus diesem Dokument bekannt. In den Dokumenten US 2006/0070847 A1,

DE 195 34 954 A1, WO 2012/045987 A1, GB 1 421 348 A sind Speichereinrichtungen zur temporären Lagerung von Artikeln gezeigt. Die Dokumente EP 0 125 054 A2, DE 101 16 854 A1, US 3 783 560 A und US 2 894 516 A betreffen Vorrichtungen zum Reinigen einer Vielzahl von Gegenständen. Die Dokumente GB 946 616 A, GB 970 534 A und US 2 990 965 A beschreiben logische Speichersysteme, um eine Einordnung mehrerer Gegenstände zu erleichtern. Die Dokumente US 2011/048894 A1 und US 3 361 247 A zeigen Sortiersysteme für Pakete, wobei Pakete mit optischen Mitteln erkannt werden. Die Dokumente US 4 991 719 A und US 3 686 899 A offenbaren Systeme zum Sortieren bzw. Falten von Kleidung im Prozess einer Kleiderreinigung.

Auch in anderen Technologiebereichen, beispielsweise im Automobilbereich, ist es erforderlich, eingesetzte Kisten oder Behälter, mit welchen Bauteile oder andere Gegenstände transportiert werden, zu reinigen.

Hier setzt die Erfindung an. Aufgabe der Erfindung ist es, eine Vorrichtung der eingangs genannten Art anzugeben, die einen kontinuierlichen Betrieb erlaubt, gleichzeitig aber auch die Möglichkeit bietet, beliebige Gegenstände wie Lebensmittelkisten abzuziehen, wenn dies erforderlich ist.

Des Weiteren ist es ein Ziel der Erfindung, ein entsprechendes Verfahren anzugeben.

Die Aufgabe wird gemäß der Erfindung gelöst, wenn bei einer Vorrichtung der eingangs genannten Art vor dem ersten Pufferbereich eine Erfassungseinrichtung zum Erkennen der Gegenstände angeordnet ist und eine Sortiereinheit vorgesehen ist, welche die Gegenstände in Abhängigkeit von der Erkennung in den ersten Pufferbereich einsortiert, und die Sortiereinheit entlang des Transportweges vor dem ersten Pufferbereich und nach dem zweiten Pufferbereich durchgehend verlaufend angeordnet ist, um Gegenstände in den ersten Pufferbereich einzusortieren und vom zweiten Pufferbereich abzunehmen.

Durch die vorgesehenen Pufferbereiche vor und nach z. B. einer Waschanlage ist es möglich, das Waschen oder allgemein Manipulieren von Gegenständen wie Lebensmittelkisten bei Bedarf kontinuierlich so zu führen, dass abnahmeseitig immer verschiedene Gegenstände zum Abtransport zur Verfügung stehen, aber auch aufgabeseitig vor dem peripheren Bereich ein entsprechendes Repertoire an Gegenständen zur Verfügung steht. Durch die Pufferbereiche kann somit sichergestellt werden, dass ein kontinuierlicher Betrieb der Vorrichtung möglich ist, aber auch verschiedene Gegenstände jeweils einer Sorte zum Abtransport bereitstehen. Die Vorrichtung ermöglicht deswegen im Gegensatz zum Stand der Technik ein äußerst flexibles Vorgehen. Im Unterschied zum Stand der Technik wird nicht mehr aktuell gerade das manipuliert, was benötigt wird, sondern kann eine z. B. Reinigung bzw. ein Waschen weitgehend unabhängig vom aktuellen Bedarf erfolgen. Es versteht sich selbstverständlich aber, dass das z. B. Waschen von Gegenständen so geführt wird, dass die abnahmeseitigen Pufferbereiche nach Möglichkeit bedarfsgerecht gefüllt sind, aber auch aufgabeseitig keine Überfüllung erfolgt.

Die Pufferbereiche können grundsätzlich beliebig ausgebildet sein. Erfindungsgemäß sind die Pufferbereiche jeweils mit mehreren Pufferstrecken ausgebildet. Auf den einzelnen Pufferstrecken können unterschiedliche Gegenstände aufgegeben bzw. abgenommen werden, wobei jede einzelne Pufferstrecke jedoch mit den gleichen Gegenständen befüllt wird. Dabei ist es einer platzsparenden und effektiven Bauweise der Vorrichtung wegen zweckmäßig, dass mehrere Pufferstrecken nebeneinander und/oder übereinander angeordnet sind. Ebenfalls bevorzugt in diesem Zusammenhang ist es, dass die Pufferstrecken geneigt verlaufend ausgebildet sind. Hierbei kann insbesondere vorgesehen sein, dass die Pufferstrecken jeweils in Transportrichtung abwärts geneigt sind. Zum selbsttätigen Verfahren der Gegenstände können die Pufferstrecken vorzugsweise mit Roll- und/oder Gleitmitteln ausgebildet sein. Die Gegenstände können durch die geneigte Ausbildung der Pufferstrecken von einer Aufgabeposition selbsttätig in eine Entnahmeposition gelangen. Sind Roll- und/oder Gleitmittel vorgesehen, vorzugsweise am Boden der Pufferstrecken, wird das selbsttätige Verfahren der Gegenstände deutlich erleichtert.

Um jeweils sortengleiche Gegenstände, z. B. Lebensmittelkisten eines bestimmten Typus in einer Reihe anordnen zu können, ist erfindungsgemäß vorgesehen, dass vor einem ersten Pufferbereich eine Erfassungseinrichtung zum Erkennen der Gegenstände angeordnet und ist eine Sortiereinheit vorgesehen, welche die Gegenstände in Abhängigkeit von der Erkennung in den ersten Pufferbereich einsortiert. Bei der Erfassungseinrichtung handelt es sich mit Vorteil um eine optische Erfassungseinrichtung. Beispielsweise kann eine Kamera vorgesehen sein, die mit einem Computer in Verbindung steht, sodass anhand eines aufgenommenen Bildes und eines Vergleiches des Bildes mit in einer Datenbank gespeicherten Daten eine richtige Zuordnung erfolgen kann. Auch eine manuelle Erfassung ist selbstverständlich möglich.

Erfindungsgemäß ist vorgesehen, dass entlang des Transportweges nach dem ersten Pufferbereich zumindest eine verfahrbare Entnahmeeinheit vorgesehen ist, mit der Gegenstände aus dem ersten Pufferbereich entnehmbar sind. Insbesondere wenn mehrere nebeneinander und übereinander angeordnete Pufferstrecken im ersten Pufferbereich vorgesehen sind, ist eine derartige Entnahmeeinheit günstig, um die Gegenstände von den einzelnen Pufferstrecken auf ein einzelnes oder gegebenenfalls auch mehrere Fördermittel aufzugeben.

Aus ähnlichen Gründen ist vorgesehen, dass entlang des Transportweges vor einem zweiten Pufferbereich zumindest eine verfahrbare Beladeeinheit vorgesehen ist, mit der Gegenstände auf den zweiten Pufferbereich aufgebbar sind. Wenn erster und zweiter Pufferbereich nebeneinander angeordnet sind, kann die Entnahmeeinheit für den ersten Pufferbereich integral mit der Beladeeinheit für den zweiten Pufferbereich ausgebildet sein, sodass ein apparativer Aufwand minimiert ist.

Erfindungsgemäß ist vorgesehen, dass die Sortiereinheit entlang des Transportweges vor dem ersten Pufferbereich und nach dem zweiten Pufferbereich durchgehend verlaufend angeordnet ist, um Gegenstände in den ersten Pufferbereich einzusortieren und vom zweiten Pufferbereich abzunehmen. Wiederum ergibt sich eine konstruktiv einfache Ausbildung der Vorrichtung. Die Sortiereinheit weist in der Regel zumindest eine Transporteinrichtung zum Bewegen der Gegenstände von einem Fördermittel auf einen Pufferplatz oder umgekehrt auf. Es können aber auch mehrere Transporteinrichtungen vorgesehen sein, je nach Ausbildung der Größe der Vorrichtung.

Sofern vorgesehen, ist die zumindest eine Waschanlage mit Vorteil oberhalb oder unterhalb eines weiteren Teils des Transportweges angeordnet. Dadurch ist es möglich, die Gegenstände in einer Schlaufe zu führen, um somit Platz zu sparen.

Das weitere Ziel der Erfindung wird erreicht, wenn bei einem Verfahren der eingangs genannten Art vor dem ersten Pufferbereich eine Erfassungseinrichtung zum Erkennen der Gegenstände eingesetzt wird und mit einer Sortiereinheit die Gegenstände in Abhängigkeit von der Erkennung in den ersten Pufferbereich einsortiert werden, wobei die Sortiereinheit entlang des Transportweges vor dem ersten Pufferbereich und nach dem zweiten Pufferbereich durchgehend verlaufend angeordnet ist und mit der Sortiereinheit Gegenstände in den ersten Pufferbereich einsortiert und vom zweiten Pufferbereich abgenommen werden.

Bei einem erfindungsgemäßen Verfahren ergeben sich die Vorteile, dass z. B. ein kontinuierliches Waschen oder allgemein Manipulieren möglich ist, gleichzeitig aber auch einzelne Pakete verschiedener Gegenstände bereitgestellt werden können. Es ist daher nicht unbedingt erforderlich, eine bestimmte Sorte Gegenstände zu manipulieren, wenn eine andere Sorte von Gegenständen abgerufen werden soll. Innerhalb der Gruppen verschiedener Gegenstände werden gleiche Gegenstände gemeinsam gepuffert und auch gemeinsam durch die Vorrichtung geführt.

Die Gegenstände werden zweckmäßigerweise auf mehrere Pufferstrecken, bevorzugt mehrere nebeneinander und/oder übereinander angeordnete Pufferstrecken, gegebenenfalls geneigt verlaufende Pufferstrecken, aufgegeben. Auf jeder einzelnen Pufferstrecke werden jeweils gleiche Gegenstände platziert, sodass jede einzelne Pufferstrecke für eine bestimmte Sorte von Gegenständen bzw. gleiche Gegenstände benutzt wird.

Erfindungsgemäß ist vorgesehen, dass vor einem ersten Pufferbereich eine Erfassungseinrichtung zum Erkennen der Gegenstände eingesetzt wird und mit einer Sortiereinheit die Gegenstände in Abhängigkeit von der Erkennung in den ersten Pufferbereich einsortiert werden. Sind die verschiedenen Gegenstände so sortiert, dass jeweils gleiche Gegenstände auf einer Pufferstrecke angeordnet sind, ist in der Folge der Fluss der Gegenstände ohne zusätzliche Erkennung steuerbar.

Bevorzugt kann auch vorgesehen sein, dass die Gegenstände auf die Pufferbereiche automatisiert aufgegeben werden. Dabei kann insbesondere auch ein Fluss der Gegenstände so gesteuert werden, dass sowohl in einem ersten, aufgabeseitigen Pufferbereich vor der zumindest einen Waschanlage oder einem anderen peripheren Bereich als auch einem zweiten, entnahmeseitigen Pufferbereich nach der zumindest einen Waschanlage oder einem anderen peripheren Bereich stets ein ausgewogener Anteil der verschiedenen Gegenstände bzw. mehrere Stücke eines bestimmten Gegenstandes zur Verfügung stehen.

Weitere Merkmale, Vorteile und Wirkungen der Erfindung ergeben sich aus dem nachfolgend dargestellten Ausführungsbeispiel. In den Zeichnungen, auf welche dabei Bezug genommen wird, zeigen:
Fig. 1 eine perspektivische Ansicht einer erfindungsgemäßen Vorrichtung;
Fig. 2 eine Seitenansicht einer erfindungsgemäßen Vorrichtung.

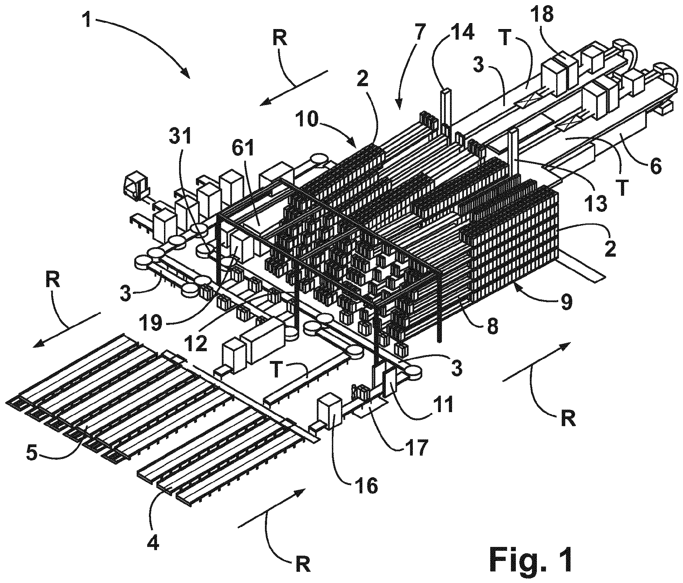

In Fig. 1 ist eine erfindungsgemäße Vorrichtung 1 zum Waschen von Gegenständen 2 schematisch dargestellt. Grundsätzlich kann anstelle der Waschanlage 6 auch jede andere periphere Einheit vorgesehen sein, in welcher die Gegenstände 2 behandelt oder in anderer Weise manipuliert werden. Die Vorrichtung 1 umfasst einen Empfangsbereich 4 für die anzuliefernden Gegenstände 2 sowie einen Abgabebereich 5 für wieder abzunehmende Gegenstände 2, die in der Vorrichtung 1 in noch zu erläuternder Weise gereinigt bzw. gewaschen werden. Im Empfangsbereich 4 erfolgt ein Wareneingang. In diesem Bereich werden zu reinigende Gegenstände 2 angeliefert. Hierbei kann es sich insbesondere um Lebensmittelkisten handeln, die zum Transport von Frischware wie Obst und Gemüse in Supermärkten und dort dann zur Präsentation bzw. Entnahme der Ware eingesetzt werden. Die zu reinigenden Lebensmittelkisten kommen üblicherweise übereinander bzw. ineinander gestapelt auf Paletten beim Wareneingang bzw. dem Empfangsbereich 4 an. Je nach anlieferndem Unternehmen können die Gebinde sortenrein oder typenrein vorliegen, was jedoch nicht zwingend ist. Es können mehrere Paletten übereinander gestapelt sein, je nachdem, wie es gesetzlich erlaubt ist. Grob dargestellt werden die zu reinigenden Gegenstände 2 im Empfangsbereich 4 aufgenommen, anschließend mit einem oder mehreren Fördermitteln 3 durch die Vorrichtung 1 geführt, wobei eine Waschanlage 6 passiert wird, und schließlich im Abgabebereich 5 wieder aus der Vorrichtung 1 geführt.

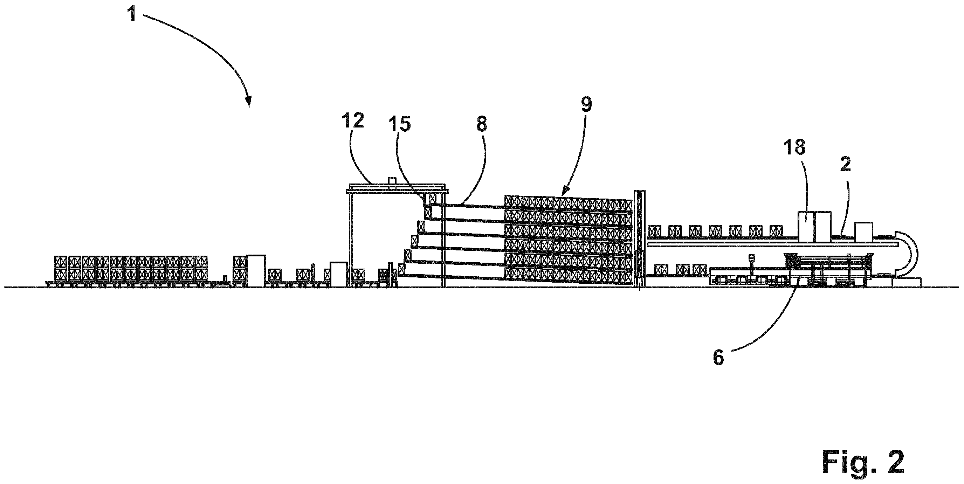

Beim Durchlaufen der Vorrichtung 1 passieren die einzelnen Paletten, wenn erforderlich, zunächst eine Vereinzelungseinrichtung 16, ehe ein Kontrollpunkt 17 passiert wird, an dem eine Kontrolle der Gebinde durch Personal erfolgen kann. Anschließend passieren die Gegenstände 2, die sich in diesem Zustand noch in gestapelter Form befinden, eine Erfassungseinrichtung 11. Die Erfassungseinrichtung 11 ist in der Regel mit optischen Elementen ausgestattet, sodass durch Vergleich mit Datenbankdaten rasch erkannt werden kann, welche Art von Gebinde vorliegt. Die Gebinde laufen dann auf dem Fördermittel 3 weiter und werden einem sogenannten Portalroboter bzw. einer Sortiereinheit 12 zugeführt. Die Sortiereinheit 12 ist längenmäßig so ausgebildet, dass sich diese über eine gesamte Breite eines anschließenden Pufferbereiches 7 erstreckt. Der Pufferbereich 7 ist mit einem ersten Pufferbereich 9 und einem zweiten Pufferbereich 10 ausgebildet. Sowohl der erste Pufferbereich 9 als auch der zweite Pufferbereich 10 umfassen jeweils mehrere Pufferstrecken 8. Bevorzugt ist vorgesehen, wie in Fig. 1 und 2 ersichtlich ist, dass mehrere Pufferstrecken 8 nebeneinander und übereinander angeordnet sind und so jeweils den ersten Pufferbereich 9 bzw. den zweiten Pufferbereich 10 bilden. Die entlang eines Transportweges T laufenden Gebinde bzw. allgemein Gegenstände 2 werden von der Sortiereinrichtung 12 bzw. dem sogenannten Portalroboter auf die einzelnen Pufferstrecken 8 des ersten Pufferbereiches 9 aufgegeben. Hierfür ist bzw. sind an der Sortiereinrichtung 12 zumindest eine, vorzugsweise mehrere Transporteinrichtungen 15 vorgesehen, die entlang der Länge der Sortiereinrichtung 12 und auch höhenmäßig verfahrbar sind, sodass die einzelnen Gebinde je nach Erkennung durch die Erfassungseinheit 11 einer einzelnen Pufferstrecke 8 zugeordnet werden. Jede Pufferstrecke 8 wird mit gleichen Gegenständen befüllt. Unterschiedliche Pufferstrecken 8 können jedoch mit voneinander verschiedenen Gegenständen 2 befüllt sein. Möglich ist es auch, mehrere Pufferstrecken 8 für jeweils die gleichen Gegenstände 2 einzusetzen. Wie die Belegung der Pufferstrecken 8 aussieht, hängt davon ab, wie viele verschiedene Gegenstände 2 bzw. Gebinde unterschiedlichen Typs durch die Vorrichtung 1 zirkulieren sollen. Die Sortiereinrichtung 12 ist gleichzeitig so ausgebildet, dass diese auch von einem Ende des zweiten Pufferbereiches 10 Gegenstände 2 wieder abnehmen und auf ein Fördermittel 3 übergeben kann. Die einzelnen Pufferstrecken 8 sind sowohl im ersten Pufferbereich 9 als auch im zweiten Pufferbereich 10 jeweils in Transportrichtung R geneigt und mit Vorteil mit Roll- und/oder Gleitmitteln ausgebildet. Aufgrund der geneigten Ausbildung können die Gegenstände 2 mit der Sortiereinrichtung 12 in den ersten Pufferbereich 9 aufgegeben werden und gleiten bzw. rutschen nach unten, sodass an einer gegenüberliegenden Entnahmeseite des ersten Pufferbereiches 9 stets eine Befüllung gegeben ist, vorausgesetzt es liegen entsprechende Gegenstände 2 vor. Analog verhält es sich im zweiten Pufferbereich 10, wobei ebenfalls eine Neigung in Transportrichtung gegeben ist. Allerdings verläuft der zweite Pufferbereich 10 bzw. dessen Pufferstrecken 8 bei der Vorrichtung gemäß Fig. 1 in entgegengesetzter Richtung. Am Ende des ersten Pufferbereiches 9 ist eine längs verfahrbare Entnahmeeinheit 13 mit einer höhenmäßig verfahrbaren Greifeinrichtung vorgesehen, mit welcher die Gegenstände 2 bzw. Gebinde von den Pufferstrecken 8 des ersten Pufferbereiches 9 entnommen und auf ein Fördermittel 3 aufgegeben werden. Sofern es sich wie im Ausführungsbeispiel um gestapelte Gebilde handelt, durchlaufen diese zunächst eine zweite Vereinzelungseinrichtung 18, werden dann über ein Fördermittel 3 über einen Bogen von 180° gefördert und durchlaufen anschließend, wie insbesondere in Fig. 2 ersichtlich ist, eine unterhalb der zweiten Vereinzelungseinrichtung 18 angeordnete Waschanlage 6. Durch die bogenförmige Führung und das damit verbundene Kippen können ganz grobe Verunreinigungen bereits entfernt werden, da diese aus den Gebinden fallen. Auch für die nachfolgende Reinigung bzw. das Waschen ist eine Lagerung am Kopf der Gebinde aus dem gleichen Grund zweckmäßig. Am Ende der Waschanlage 6 erfolgt wiederum eine Stapelung der Gegenstände 2 bzw. Gebinde. Mit einer Beladeeinheit 14 werden die so gebildeten Stapel auf Pufferstrecken 8 des zweiten Pufferbereiches 10 aufgegeben. Aufgrund der wie erwähnt geneigten Ausbildung der Pufferstrecken 8 im Bereich des zweiten Pufferbereiches 10 gleiten die einzelnen Gebindestapel wiederum bis zu einem Anschlag an dem gegenüberliegenden Ende, wo die Gebindestapel je nach Bedarf mit der Sortiereinheit 12 abgenommen und auf ein Fördermittel 3 abgegeben werden können. Anschließend werden die Gebinde zum Abgabebereich 5 gebracht, wo diese wiederum bedarfsweise entnommen werden können.

Wie in Fig. 1 ersichtlich ist, sind zumindest zwei Waschanlagen 6 vorgesehen. Vorgesehen sein kann auch, dass angelieferte Plastikpaletten gewaschen werden. Die entsprechenden Paletten werden entlang eines Fördermittels 31 geführt und nach allenfalls Vereinzelung in einer dritten Vereinzelungseinrichtung 19 durch eine Waschanlage 61 geführt. Die Paletten können schließlich seitlich abgenommen werden.

Mit einer erfindungsgemäßen Vorrichtung 1 lassen sich Gegenstände 2 bzw. im speziellen Gebinde wie Lebensmittelkisten, die innerhalb eines bestimmten Typus gleich voneinander aber je nach Typus unterschiedlich sind, effektiv reinigen bzw. waschen, ohne dass ein Mangel an einem bestimmten Typus auftritt, wenn dieser rasch verfügbar sein muss. Dies wird im Wesentlichen durch den ersten Pufferbereich 9 sowie den zweiten Pufferbereich 10, welche in Transportrichtung R vor bzw. nach den Waschanlagen 6 angeordnet sind. Die Erfindung bietet somit eine konstruktiv relativ einfach zu realisierende Waschanordnung mit einem hohen Maß an Flexibilität der Bereitstellung verschiedener Gebinde.

Wenngleich sich das vorstehende Ausführungsbeispiel auf Lebensmittelkisten bezieht, können auch andere Transportkisten, z. B. solche, die bei einer Fertigung im Automobilbereich eingesetzt werden, gereinigt werden. Der Gebindepuffer erlaubt in allen Fällen eine effiziente Verfahrensführung.

## Patentansprüche

1. Vorrichtung (1) zum Manipulieren von Gegenständen (2), insbesondere einer Vielzahl von verschiedenen Behältern wie Lebensmittelkisten, umfassend zumindest ein Fördermittel (3) zum Transportieren der Gegenstände (2) entlang eines Transportweges (T) von einem Empfangsbereich (4) zu einem Abgabebereich (5) sowie zumindest einen peripheren Bereich, wie eine Waschanlage (6), welcher dazu ausgebildet ist, dass in diesem die Gegenstände (2) manipuliert werden, wobei der periphere Bereich zwischen Empfangsbereich (4) und Abgabebereich (5) angeordnet ist und durch welchen die Gegenstände (2) führbar sind, wobei entlang des Transportweges (T) vor und nach dem zumindest einen peripheren Bereich Pufferbereiche (7) zur temporären Aufnahme jeweils gleicher Gegenstände (2) vorgesehen sind, wobei die Pufferbereiche (7) jeweils mit mehreren Pufferstrecken (8) ausgebildet sind, wobei entlang des Transportweges (T) nach einem ersten Pufferbereich (9) zumindest eine verfahrbare Entnahmeeinheit (13) vorgesehen ist, mit der Gegenstände (2) aus dem ersten Pufferbereich (9) entnehmbar sind, und entlang des Transportweges (T) vor einem zweiten Pufferbereich (10) zumindest eine verfahrbare Beladeeinheit (14) vorgesehen ist, mit der Gegenstände (2) auf den zweiten Pufferbereich (10) aufgebbar sind, **dadurch gekennzeichnet, dass** vor dem ersten Pufferbereich (9) eine Erfassungseinrichtung (11) zum Erkennen der Gegenstände (2) angeordnet ist und eine Sortiereinheit (12) vorgesehen ist, welche die Gegenstände (2) in Abhängigkeit von der Erkennung in den ersten Pufferbereich (9) einsortiert, und die Sortiereinheit (12) entlang des Transportweges (T) vor dem ersten Pufferbereich (9) und nach dem zweiten Pufferbereich (10) durchgehend verlaufend angeordnet ist, um Gegenstände (2) in den ersten Pufferbereich (9) einzusortieren und vom zweiten Pufferbereich (10) abzunehmen.

2. Vorrichtung (1) nach Anspruch 1, **dadurch gekennzeichnet, dass** die Pufferstrecken (8) geneigt verlaufend ausgebildet sind.

3. Vorrichtung (1) nach Anspruch 2, **dadurch gekennzeichnet, dass** die
Pufferstrecken (8) jeweils in Transportrichtung (R) abwärts geneigt und zum selbsttätigen Verfahren der Gegenstände (2) vorzugsweise mit Roll- und/oder Gleitmitteln ausgebildet sind.

4. Vorrichtung (1) nach einem der Ansprüche 1 bis 3, **dadurch gekennzeichnet, dass** die Sortiereinheit (12) zumindest eine Transporteinrichtung (15) zum Bewegen der Gegenstände (2) von einem Fördermittel (3) auf einen Pufferplatz des ersten Pufferbereiches (9) oder zweiten Pufferbereiches (10) oder umgekehrt umfasst.

5. Vorrichtung (1) nach einem der Ansprüche 1 bis 4, **dadurch gekennzeichnet, dass** der zumindest eine periphere Bereich eine Waschanlage (6) ist und die Waschanlage (6) oberhalb oder unterhalb eines weiteren Teils des Transportweges (T) angeordnet ist.

6. Verfahren zum Manipulieren von Gegenständen (2), insbesondere einer Vielzahl von verschiedenen Behältern wie Lebensmittelkisten, wobei die Gegenstände (2) mit zumindest einem Fördermittel (3) entlang eines Transportweges (T) von einem Empfangsbereich (4) zu einem Abgabebereich (5) transportiert werden und dabei durch einen peripheren Bereich wie einen Waschanlagenbereich geführt werden, in welchem die Gegenstände (2) manipuliert werden, wobei der periphere Bereich zwischen Empfangsbereich (4) und Abgabebereich (5) angeordnet ist, wobei die Gegenstände (2) entlang des Transportweges (T) vor und nach dem zumindest einen peripheren Bereich in Pufferbereichen (7) temporär aufgenommen werden, wobei die Pufferbereiche (7) jeweils mit mehreren Pufferstrecken (8) ausgebildet sind, wobei entlang des Transportweges (T) nach einem ersten Pufferbereich (9) zumindest eine verfahrbare Entnahmeeinheit (13) eingesetzt wird, mit der Gegenstände (2) aus dem ersten Pufferbereich (9) entnehmbar sind, und entlang des Transportweges (T) vor einem zweiten Pufferbereich (10) zumindest eine verfahrbare Beladeeinheit (14) eingesetzt wird, mit der Gegenstände (2) auf den zweiten Pufferbereich (10) aufgegeben werden, **dadurch gekennzeichnet, dass** vor dem ersten Pufferbereich (9) eine Erfassungseinrichtung (11) zum Erkennen der Gegenstände (2) eingesetzt wird und mit einer Sortiereinheit (12) die Gegenstände (2) in Abhängigkeit von der Erkennung in den ersten Pufferbereich (9) einsortiert werden, wobei die Sortiereinheit (12) entlang des Transportweges (T) vor dem ersten Pufferbereich (9) und nach dem zweiten Pufferbereich (10) durchgehend verlaufend angeordnet ist und mit der Sortiereinheit Gegenstände (2) in den ersten Pufferbereich (9) einsortiert und vom zweiten Pufferbereich (10) abgenommen werden.

7. Verfahren nach Anspruch 6, **dadurch gekennzeichnet, dass** die Gegenstände (2) auf mehrere nebeneinander und/oder übereinander angeordneten Pufferstrecken (8), gegebenenfalls geneigt verlaufende Pufferstrecken (8), aufgegeben werden.

8. Verfahren nach einem der Ansprüche 6 oder 7, **dadurch gekennzeichnet, dass** die Gegenstände (2) auf die Pufferbereiche (7) automatisiert aufgegeben werden.

## Claims

1. Apparatus (1) for manipulating objects (2), in particular a plurality of various containers such as food crates, comprising at least one conveyor means (3) for transporting the objects (2) along a transport path (T) from a receiving zone (4) to a deposit zone (5), and at least one peripheral zone such as a washing system (6), which is designed such that the objects (2) are manipulated therein, wherein the peripheral zone is arranged between the receiving zone (4) and the deposit zone (5), and through which the objects (2) can be guided, wherein buffer zones (7) are provided before and after the at least one peripheral zone along the transport path (T) to temporarily accommodate objects (2) of the same kind, wherein the buffer zones (7) are each designed with multiple buffer segments (8), wherein at least one displaceable unloading unit (13) is provided after a first buffer zone (9) along the transport path (T), with which objects (2) can be unloaded from the first buffer zone (9), and at least one displaceable loading unit (14) is provided before a second buffer zone (10) along the transport path (T), with which objects (2) can be placed on the second buffer zone (10), **characterized in that** before the first buffer zone (9) a sensing apparatus (11) for detecting the objects (2) is arranged and a sorting unit (12) is provided which sorts the objects (2) to the first buffer zone (9) according to their detection, and the sorting unit (12) is arranged to extend continuously along the transport path (T) before the first buffer zone (9) and after the second buffer zone (10) to sort objects (2) into the first buffer zone (9) and take objects from the second buffer zone (10).

2. Apparatus (1) according to claim 1, **characterized in that** the buffer segments (8) are constructed such that their course is sloping.

3. Apparatus (1) according to claim 2, **characterized in that** the buffer segments (8) each slope downwards in the direction of transport (R) and are constructed preferably with rolling and/or sliding means to enable the objects (2) to move without external impetus.

4. Apparatus (1) according to any one of claims 1 to 3, **characterized in that** the sorting unit (12) comprises at least one transport device (15) for moving the objects (2) from a conveyor means (3) up to a buffer space of the first buffer zone (9) or the second buffer zone (10) or vice versa.

5. Apparatus (1) according to any one of claims 1 to 4, **characterized in that** the at least one peripheral zone is a washing system (6), and the washing system (6) is arranged above or below a further section of the transport path (T).

6. Method for manipulating objects (2), in particular a plurality of various containers such as food crates, wherein the objects (2) are transported by at least one conveyor means (3) along a transport path (T) from a receiving zone (4) to a deposit zone (5), and are thereby guided through a peripheral zone such as a washing system zone in which the objects (2) are manipulated, wherein the peripheral zone is arranged between the receiving zone (4) and the deposit zone (5), wherein the objects (2) are accommodated temporarily in buffer zones (7) before and after the at least one peripheral zone along the transport path (T), wherein the buffer zones (7) are each designed with multiple buffer segments (8), wherein at least one displaceable unloading unit (13) is implemented after a first buffer zone (9) along the transport path (T), with which objects (2) can be unloaded from the first buffer zone (9), and at least one displaceable loading unit (14) is implemented before a second buffer zone (10) along the transport path (T), with which objects (2) are placed on the second buffer zone (10), **characterized in that** a sensing apparatus (11) for detecting the objects (2) is implemented before the first buffer zone (9), and the objects (2) are sorted into the first buffer zone (9) by a sorting unit (12) according to their detection, wherein the sorting unit (12) is arranged to extend continuously along the transport path (T) before the first buffer zone (9) and after the second buffer zone (10) and objects (2) are sorted into the first buffer zone (9) and taken from the second buffer zone (10) with the sorting unit.

7. Method according to claim 6, **characterized in that** the objects (2) are placed onto multiple buffer segments (8) arranged side by side and/or one above the other, optionally sloping buffer segments (8).

8. Method according to either of claims 6 or 7, **characterized in that** the objects (2) are placed on the buffer zones (7) automatically.

## Revendications

1. Dispositif (1), destiné à manipuler des objets (2), notamment une pluralité de différents contenants, tels que des caisses de produits alimentaires, comprenant au moins un moyen de convoyage (3) pour transporter des objets (2) le long d'une voie de transport (T), d'une zone de réception (4) vers une zone de dépose (5), ainsi qu'au moins une zone périphérique, telle qu'une installation de lavage (6), laquelle est conçue pour que les objets (2) y soient manipulés, la zone périphérique étant placée entre la zone de réception (4) et la zone de dépose (5) et à travers laquelle, les objets (2) peuvent être conduits, le long de la voie de transport (T), à l'avant et à l'arrière de l'au moins une zone périphérique étant prévues des zones tampons (7) pour la réception temporaire d'objets (2) respectivement identiques, les zones tampons (7) étant conçues chacune avec plusieurs trajets tampons (8), le long de la voie de transport (T), à l'arrière d'une première zone tampon (9) étant prévue au moins une unité de prélèvement (13) déplaçable, à l'aide de laquelle des objets (2) peuvent être prélevés à partir de la première zone tampon (9), et le long de la voie de transport (T), à l'avant d'une deuxième zone tampon (10) étant prévue au moins une unité de chargement (14) déplaçable, à l'aide de laquelle des objets (2) peuvent être distribués sur la deuxième zone tampon (10), **caractérisé en ce qu'**à l'avant de la première zone tampon (9) est placé un système de détection (11), destiné à identifier les objets (2) et une unité de triage (12) étant prévue, laquelle en fonction de l'identification, intègre par tri des objets (2) dans la première zone tampon (9), et l'unité de triage (12) étant placée en s'écoulant en continu le long de la voie de transport (T) à l'avant de la première zone tampon (9) et à l'arrière de la deuxième zone tampon (10), pour intégrer par tri des objets (2) dans la première zone tampon (9) et les reprendre de la deuxième zone tampon (10).

2. Dispositif (1) selon la revendication 1, **caractérisé en ce que** les trajets tampons (8) sont conçus en s'écoulant en inclinaison.

3. Dispositif (1) selon la revendication 2, **caractérisé en ce que** les trajets tampons (8) sont chacun inclinés vers le bas dans la direction de transport (R) et pour le déplacement automatique des objets (2), sont conçus de préférence avec des moyens roulants et / ou coulissants.

4. Dispositif (1) selon l'une quelconque des revendications 1 à 3, **caractérisé en ce que** l'unité de triage (12) comprend au moins un système de transport (15), destiné à mouvoir les objets (2) d'un moyen de transport (3) sur un emplacement tampon de la première zone tampon (9) ou de la deuxième zone tampon (10) ou inversement.

5. Dispositif (1) selon l'une quelconque des revendications 1 à 4, **caractérisé en ce que** l'au moins une zone périphérique est une installation de lavage (6) et **en ce que** l'installation de lavage (6) est placée au-dessus ou en-dessous d'une autre partie de la voie de transport (T).

6. Procédé, destiné à manipuler des objets (2), notamment une pluralité de différents contenants tels que des caisses de produits alimentaires, les objets (2) étant transportés à l'aide d'au moins un moyen de convoyage (3) le long d'une voie de transport (T), d'une zone de réception (4) vers une zone de décharge (5) et étant conduits à cet effet à travers une zone périphérique, telle qu'une zone d'une installation de lavage, dans laquelle les objets (2) sont manipulés, la zone périphérique étant placée entre la zone de réception (4) et la zone de dépose (5), les objets (2) étant réceptionnés temporairement le long de la voie de transport (T), à l'avant et à l'arrière de l'au moins une zone périphérique dans des zones tampons (7), les zones tampons (7) étant conçues chacune avec plusieurs trajets tampons (8), le long de la voie de transport (T), à l'arrière d'une première zone tampon (9) étant prévue au moins une unité de prélèvement (13) déplaçable, à l'aide de laquelle des objets (2) peuvent être prélevés à partir de la première zone tampon (9), et le long de la voie de transport (T), à l'avant d'une deuxième zone tampon (10) étant mise en œuvre au moins une unité de chargement (14) déplaçable, à l'aide de laquelle des objets (2) peuvent être distribués sur la deuxième zone tampon (10), **caractérisé en ce qu'**à l'avant de la première zone tampon (9) est mis en œuvre un système de détection (11), destiné à identifier les objets (2) et à l'aide d'une unité de triage (12), en fonction de l'identification, les objets (2) étant intégrés par tri dans la première zone tampon (9), l'unité de triage (12) étant placée en s'écoulant en continu le long de la voie de transport (T) à l'avant de la première zone tampon (9) et à l'arrière de la deuxième zone tampon (10) et à l'aide de l'unité de triage, des objets (2) étant intégrés par tri dans la première zone tampon (9) et repris de la deuxième zone tampon (10).

7. Procédé selon la revendication 6, **caractérisé en ce que** les objets (2) sont distribués sur plusieurs trajets tampons (8) placés côte à côte et / ou superposés, le cas échéant des trajets tampons (8) s'écoulant en inclinaison.

8. Procédé selon l'une quelconque des revendications 6 ou 7, **caractérisé en ce que** les objets sont distribués de manière automatisée (2) sur les zones tampons (7).
